# EUROPEAN PATENT SPECIFICATION

(11) **EP 0 890 889 B1**
(45) Date of publication and mention of the grant of the patent: **17.10.2001**
(21) Application number: 98112644.4
(22) Date of filing: 08.07.1998
(51) Int. Cl.: G05B 19/04

(54) **Washing machine, particularly a laundry washer, comprising an electromechanical timer and an electronic digital control module**
Waschmaschine, insbesondere zum Wäschewaschen, mit einer elektromechanischen Zeitschaltuhr und einem elektronischen, digitalen Steuermodul
Machine à laver, notamment lave-linge, comprenant un circuit temporisateur électroméchanique et un module électronique numérique de contrôle

(30) Priority: 09.07.1997 IT TO970610
(43) Date of publication of application: 13.01.1999
(73) Proprietor: Merloni Elettrodomestici S.p.A., 60044 Fabriano (AN) (IT)
(72) Inventor: Milone, Davide, 60044 Fabriano (AN) (IT); Mariotti, Costantino, 06028 Sigillo (PG) (IT)

(56) References cited:
- EP-A- 0 542 599
- EP-A- 0 654 720

## Description

The present invention refers to a washing machine, particularly a laundry washer, of the type comprising an electromechanical timer which, by means of at least some of its contacts, determines connection and disconnection states of a motor of the washing machine from a mains voltage, and an electronic digital control module, which concur to the control of the motor speed, the electronic digital control module being provided with a microcontroller and a solid state electronic switch, for choking the electric current being supplied to the motor.

Washing machines, such as for instance laundry washers, usually comprise a universal motor, for rotating a basket containing the laundry to be washed, said motor being constituted by a rotor and a stator.

The motor is usually controlled by means of two electromechanical commutators, used for realizing the inversion of the rotating direction of the motor, an electromechanical commutator for selecting an intermediate tap of the stator, and an electronic regulator mainly constituted by a semiconductor electronic switch, such as for instance a triac, and an electronic circuit based on a microcontroller.

The correct operation of this configuration requires the correct coordination of said distinct electromechanical and electronic elements.

The electronic switch has the function of controlling the effective voltage given to the motor, for obtaining in this way a speed being substantially proportional to the given voltage; a connection in series is also required for the rotor and the stator, having a suitable configuration and polarity, for each operating mode of the laundry washer (right-hand rotation, left-hand rotation, high speed spinning, low speed spinning), all the above according to the known technique.

The electromechanical contacts requires, for their own safety, the electronic switch be completely disarmed at the instant of their commutation, i.e. that no tension is given to the contacts; in the negative, voltaic arcs would be produced, which could damage the surface of the contacts.

In order to obtain the above described correct synchronization between the electromechanical and the electronic parts, it is known for example to use electromechanical commutators such as relays, which are driven by the same microcontroller which drives the triac. This fact requires a microcontroller being able to drive the two categories of devices with the correct sequence.

It is also known the use of electromechanical contacts being incorporated in an electromechanical cams timer, which is operated by a low power synchronous motor. In this case, auxiliary contacts of the timer are normally used, being synchronized with the cited commutators, the formers being specifically designed to inform the electronic unit of the correct position of the latters.

This solution can be simplified if a way is found for ascertaining the state of the electromechanical commutators during each moment, without the necessity of the cited auxiliary contacts.

This is possible, for instance, by considering that the movement of the commutators which operate the motor (being caused by a camshaft having cams arranged on a circumference, entrained by an asynchronous motor reducer supplied at constant mains frequency) follows a periodic cyclical law, which is consequently perfectly foreseeable in the time. Theoretically, therefore, it is sufficient to know the position of the cam in a given instant, to foresee the instant in which the opening or the closure of each of the contacts being operated by said cam will occur. However, sufficiently suitable practical solutions have not yet been found to this purpose.

In order to solve said problems, electronic circuits have then been proposed, being able to recognize the open or closed state of the electromechanical commutators which supply the motor, based on the idea of making a current to circulate, which can be detected by the same circuits, by means of loads connected in parallel with the triac, or by activating the triac with the lowermost conduction angle.

This solution has however the main problem of causing a current consumption for the same act of the detection. In addition, due to the fact that the detecting method implies a current circulation in the motor and the contacts, in order to know their state, radio-electric interferences are caused, due to the phenomenon of overvoltage of opening of the contacts in series with inductive loads.

The same phenomenon finally generates voltage variations in the time, being very quick and high in value, i.e. in the order of hundreds of volts per µs. This can lead to an activation of the electronic switch being timely inappropriate.

The present invention has the aim of solving the above mentioned problems and to indicate a washing machine, particularly a laundry washer, being of improved realization and more efficient with respect to the known solutions.

Within this frame, the main aim of the present invention is that of indicating a washing machine, particularly a laundry washer, having an electronic control module which is able to know the state of the electromechanical commutators of a timer, without any test-current being taken from the motor and the contacts, and to consequently generate activation cycles of the electronic switch which are automatically synchronized with the state of the electromechanical programmer or timer.

A further aim of the present invention is that of indicating an improved electronic control module.

Said purposes are obtained, according to the present invention, by a washing machine, in particular a laundry washer, an electronic control module and a method for managing the rotation of a motor of a washing machine having the features of the annexed claims, which are integral part of the present description.

Further aims, characteristics and advantages of the present invention will become apparent from the following detailed description and the annexed drawings, supplied only by way of an explanatory but not limiting example, wherein :
- Fig, 1 represents a part of the control circuit of a washing machine in accordance with a first possible embodiment of the present invention;
- Fig, 2 represents a part of the control circuit of a washing machine in accordance with a second possible embodiment of the present invention.

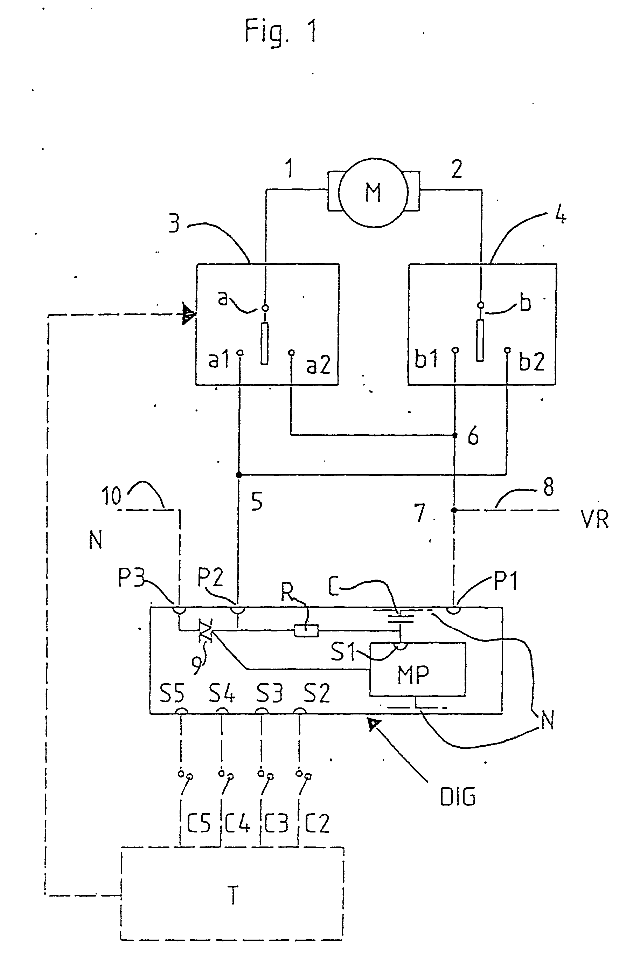

In Fig. 1, M indicates a washing motor, of the commutator type, used in a washing machine according to the invention.

At the terminals 1 and 2 of the motor M, contacts a and b are connected, being operated by relevant cams 3 and 4 of an electromechanical timer T; cams 3 and 4 are in particular so-called "fast" cams of the timer T.

Contacts a and b can close, in function of the position attained by cams 3 and 4, onto contacts a1 or a2 and b1 or b2 respectively or attain an opening position, being intermediate between a1 e a2, and b1 and b2, respectively.

Contacts a1 and b2 are electrically connected to a node 5, while contacts a2 and b1 are electrically connected to a node 6, which is in turn electrically connected to a node 7, to which the mains voltage VR arrives by means of a line 8.

DIG indicates an electronic module of digital control, of the type comprising a microcontroller MP having suitable memory means associated with.

Module DIG has a first series of terminal P1-P3 (power contacts), which connect the module itself to terminals 1 and 2 of the motor, by means of contacts a and b. In general, on a digital electronic control module, the power terminals are in a greater number than that represented in Fig. 1: however, only the terminals being useful to understand the operation of the invention are herein represented.

Between terminals P2 and P3 a power electronic switch device 9 is present, which is represented in the instant case by a triac, being within the digital module DIG and driven by the microcontroller MP, which realizes the regulation of the rotating speed of the motor M.

Terminal P3 is connected, by a line 10, to the neutral phase of the supply N; terminal P2 is connected to the node 5.

The digital electronic module DIG has also a second series of terminals S2-S5 (signal contacts), connected to suitable ports of the microcontroller MP (not represented in the figures for simplicity's sake). Again, also the signal terminals being present of the digital controller DIG are usually in a greater number; in the case of Fig. 1, only some of them are represented, for explanatory purposes of the operation of the invention.

Terminals S2-S5 are connected to contacts C2-C5 being operated by relevant "slow" cams of the timer T. Said contacts, depending upon the washing program, sends codes to terminals S2-S5 (and therefore to the microcontroller MP), so that the microcontroller MP controls the rotating speed of the motor M according to the phase of the developing washing program; this is obtained by adjusting the supply to the motor M by a suitable driving of the triac 9 and a return signal coming from a tachometer dynamo (not represented), or similar device able to generate a signal being representative of the motor speed.

Microcontroller MP has a supply pin also connected to the neutral phase N, this configuration being in any case well known. In addition, microcontroller MP is, always according to a known technique, able to receive a signal of the phase voltage, in order to recognize whether the latter is at its negative or positive half-cycle. According to the invention, a terminal S1, or any port which can be configured as input or output of the microcontroller MP, is connected by means of a resistance R to terminal P2. Terminal S1 is also connected by a capacitor C to the neutral phase N.

The charge time of the capacitor C follows an exponential law and depends upon the product of the value of the resistance R and the capacitor C, as well as the value of an impedance Z which is between the terminal P2 of the electronic switch and the neutral phase N. In the case in which the voltage of the given supply source is well greater than the logic threshold of the microcontroller, said exponential charge approaches a linear charge with constant current being equal to the quotient of the applied tension and the value of the resistance in series, so obtaining that the discharge time is inversely proportional to the total resistance.

In short, the charge time is a function of the value of the impedance Z seen between terminals P2 and P3.

The operation of the circuit of Fig. 1 is as follows.
a) during the negative half-cycle of the mains voltage, the microcontroller MP configures its port S1 as an output and applies a logic voltage VL of high value, the charging capacitor C which, for instance, has a value of 10 nF;
b) during the subsequent negative half-cycle, at a determined instant TD, after the zero-crossing of the mains voltage, microcontroller MP configures port S1 as a logic input;
c) after a time period TP, the logic value being present at port S1 of the microcontroller MP is measured. Said step can be repeated at each cycle of the mains voltage, or at time intervals being determined in function of the admissible current consumption and the required measure resolution.

In this way, if a low logic level is detected at the logic input S1, this is interpreted as a low impedance Z, which corresponds to the condition of having contacts a and b closed. On the contrary, if a high logic level is detected at the logic input S1, this is interpreted as a high impedance Z, which corresponds to the condition of having contacts a and b open.

The reason of said interpretation has to be found in the fact that, during the step b), the capacitor C tends to discharge, through resistance R, contacts a and b and motor M, to the mains voltage VR, which has a very strong negative value, for instance -100 V. Capacitor C therefore discharges very rapidly.

If contacts a and b are not closed, the discharge time of the capacitor C is affected by resistance R and by the fact that there is an open circuit, instead of motor M; the discharge time is therefore very slow, so practically maintaining the logic level stored during step a).

It is therefore evident that, in the above described way, microcontroller MP is able to detect, through the discharge time of the capacitor C and the voltage at its terminals, the open or closed condition of contacts a and b, so as to consequently generate the activation cycles of the electronic switch 9, being automatically synchronized with the electromechanical timer T.

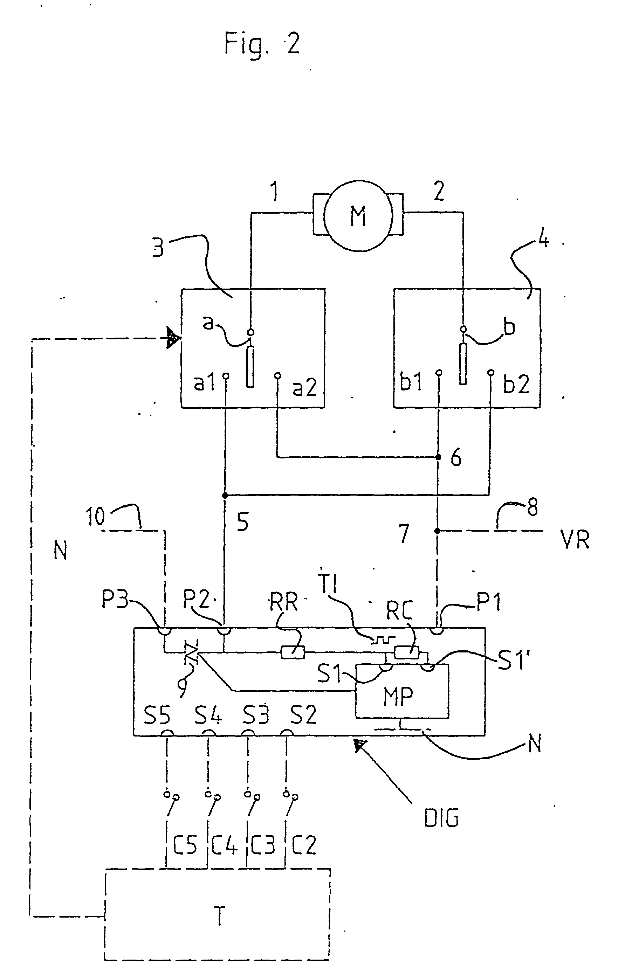

In Fig. 2 a possible variant is represented. with respect to the circuit of Fig. 1; in Fig. 2, the same reference number of Fig. 1 are used for indicating technically equivalent elements.

In the case of Fig. 2, microcontroller MP uses two ports S1 and S1', being respectively configured as an output and an input.

Port S1 generates a continuous or discontinuous pulse train TI at low frequency and low voltage, which is brought, by a resistance RR, to terminal P2.

Port S1', which is configured as an input, is connected to port S1 through a RC circuit, which is just a RC filter of the low-pass type, in which the values of resistance and capacity are dimensioned for allowing the frequency of the pulse train TI to pass.

Resistance RR and the frequency of the pulse train TI are instead dimensioned in order that the deriving attenuation, combined with the parasitic capacity of the triac 9, be negligible. For instance, by using a resistance RR of 500 Kohm having a parasitic capacity of the triac 9 of 10 nF, a pulse train TI having a frequency lower than 66 Hz can be used.

In the case in which one of the contact a or b is open, the pulse train TI will be received with a determined voltage level, being sufficient for allowing the port S1' to detect it.

In the case where contacts a and b are closed, terminal P2 will have at its ends a low impedance being substantially constituted by the motor M, determining a clear reduction of the amplitude of the pulse train TI, which consequently the port S1' will be no longer able to detect.

More specifically, in this case the method for measuring the impedance Z provides for:
a) generating a pulse train TI, having an amplitude A and a frequency F, to the port S1;
b) activating the microcontroller MP for recognizing the presence of the pulse train TI at the frequency F at its port S1';
c) if, after a given time TA, the pulse train TI is not detected at the port S1', the microcontroller MP identifies this state as a closed condition of contacts a and b;
d) if, after the time TA, the pulse train TI is detected, the microcontroller MP identifies this state as an open condition of contacts a and b.

As it can be noticed, therefore, also according to the embodiment of Fig. 2, the microcontroller MP is perfectly able to detect the connection or disconnection condition of contacts a and b, so as to generate consequently the activation cycles of the electronic switch 9 being automatically synchronized with the state of the electromechanical programmer or timer T.

From the given description the characteristics and the advantages of the present invention are therefore clear.

In the washing machine, particularly a laundry washers, described as an example, the microcontroller provides to analyze the response of the circuit to a voltage or current stimulus, sent by the microcontroller itself, by virtue of the possibility of considering, on the basis of the theorem of the superimposition of the effects, the circuit of the motor and the contacts as an impedance which varies according to the mains voltage and the position of the contacts.

The washing machine described as an example can therefore advantageously know the state of the electromechanical commutators, without circulating any current through the motor and the contacts, and can consequently generate activation cycles of the electronic switch which are automatically synchronized with the electromechanical programmer.

Advantageously, the washing machine, particularly a laundry washers, according to the invention does not originates any problem due to current consumption and, particularly, to interferences being associated to such a method of measure.

It is obvious that many changes are possible, for the man skilled in the art, to the washing machine, particularly a laundry washers, described by way of example, without departing from the novelty spirit of the inventive idea, as it is also clear that in the practical actuation of the invention the embodiments of the represented elements could be different, and the same be replaced by technically equivalent elements.

In particular, the method for measuring the impedance level being associated to the circuit of the motor could be of a different type, the range of methods of measure able to detect such an impedance change being very wide.

## Claims

1. Washing machine, particularly a laundry washer, of the type comprising an electromechanical programmer which, by means of at least some of its contacts (a,b) determines connection and disconnection states of a motor (M) of the machine from a mains voltage (VR), and an electronic digital control module (DIG), which concur to the control of the speed of the motor (M) of the washing machine, the electronic digital control module (DIG) being provided with a microcontroller (MP) and a solid state electronic switch (9) for choking the electric current supplied to the motor (M), **characterized in that** the electronic digital control module (DIG) comprises means (MP,R,C;MP,RR,RC) for measuring an impedance (Z) at terminals of said module, in particular at the terminals (P2, 10) of the electronic switch (9), in order to identify the connection state of the motor (M), the measure of said impedance (Z) being used by the microcontroller (MP) for controlling the operation of said electronic switch (9), generating predetermined periods of stop and operation, being synchronized with the detection of the disconnection or connection state.

2. Washing machine, particularly a laundry washer, according to claim; 1, **characterized in that** the means (MP,R,C;MP,RR,RC) for measuring the impedance (Z) are realized by a RC circuit (R,C) connected between a port (S1) of the microcontroller (MP) and a terminal of the electronic switch (9), the port (S1) being alternatively configured as an input and an output.

3. Washing machine, particularly a laundry washer, according to claim, 1, **characterized in that** the means (MP,R,C;MP,RR,RC) for measuring the impedance (Z) are realized by a resistive circuit (RR) between a terminal (P2) of the electronic switch (9) and a first port (S1) of the microcontroller (MP), configured as an output, and by a low-pass filter (RC) comprised between said resistive circuit (RR) and a second port (S1') of the microcontroller (MP), configured as an input.

4. Washing machine, particularly a laundry washer, according to claim 3, **characterized in that** the first port (S1) generates a pulse train (TI) having a determined frequency (F), while the second port (S1') recognizes the presence of a signal obtained from said pulse train (TI).

5. Washing machine, particularly a laundry washer, of the type comprising an electromechanical programmer which, by means of at least some of its contacts (a,b) determines connection and disconnection states of a motor (M) of the machine from a mains voltage (VR), and an electronic digital control module (DIG), which concur to the regulation of the speed of the motor (M), the electronic digital control module (DIG) being provided with a microcontroller (MP) and a solid state electronic switch (9) for choking the electric current supplied to the motor (M), **characterized in that** the electronic digital control module (DIG) comprises time means (R,C;RR,RC) which are charged and discharged periodically with a time constant which is function of the connection and disconnection state of the motor (M) and that means (MP) are provided which, by measuring the charge value of said time means (R,C;RR,RC), are able to identify the connection or disconnection state of the motor (M).

6. Method for managing the rotation of a motor of a washing machine, particularly a laundry washer, of the type using an electromechanical programmer, which by means of at least some of its contacts (a,b) determines connection and disconnection states of a motor (M) of the machine from a mains voltage (VR), and an electronic digital control module (DIG), which concur to the regulation of the speed of the motor (M), the electronic digital control module (DIG) being provided with a microcontroller (MP) and a solid state electronic switch (9) for choking the electric current supplied to the motor (M), **characterized in that** the following steps are provided:
a) measure of the impedance (Z) which is present at terminals of said module, in particular at the terminals (P2, 10) of the solid state electronic switch (9);
b) association of the value of the measure of said impedance (Z) to the state of connection or disconnection of the contacts (a,b);
d) inhibition of the operation of the solid state electronic switch (9) by the microcontroller (MP) in case of disconnection state of the contacts (a,b), or permission of the operation of the solid state electronic switch (9) by the microcontroller (MP) in case of connection state of the contacts (a,b).

7. Method for managing the rotation of a motor of a washing machine, particularly a laundry washer, according to claim 6, **characterized in that** the measure of the impedance (Z) is realized according to the following steps:
i) configuring a port (S1) of the microcontroller (MP) as an output during a negative half-cycle of the mains voltage (VR), and applying a positive voltage (VL) to a capacitive element (C) belonging to a RC circuit (R,C) connected between said port (S1) and a terminal (P2) of the electronic switch (9);
ii) configuring the port (S1) of the microcontroller (MP) as a logic input in a determined instant (TD) of the subsequent negative half-cycle of the mains voltage (VR);
iii) detecting, after a prefixed time (TP), the logic value being present at the port (S1) by the RC circuit (R,C);
vi) cyclic repetition of steps i), ii) and iii).

8. Method for managing the rotation of a motor of a washing machine, particularly a laundry washer, according to claim 6, **characterized in that** the measure of the impedance (Z) is realized according to the following steps:
a) configuring a first port (S1) of the microcontroller (MP) as an output for a pulse train (TI) having determined amplitude (A) and frequency (F);
b) configuring a second port (S1') of the microcontroller (MP) as an input for detecting said pulse train (TI), which reaches the second port (S1') through a low-pass filter (RC) being connected through a resistive circuit (RR) to a terminal (P2) of the electronic switch (9);
c) measuring for a prefixed time (TA) the frequency at the second port (S1') of the microcontroller (MP), wherein:
c') if the determined frequency (F) of the pulse train (TI) is detected, the microcontroller (MP) identifies the disconnection state of the contacts (a,b)
c") if the determined frequency (F) of the pulse train (TI) is not detected, the microcontroller (MP) identifies the connection state of the contacts (a,b);
d) cyclic repetition of step c).

9. Electronic digital control module, for controlling the rotation of a motor (M) of a washing machine, particularly a laundry washer, comprising a microcontroller (MP), which uses the features of one or more of the preceding claims.

## Patentansprüche

1. Waschmaschine, insbesondere Wäschewaschmaschine, die enthält:
eine elektromechanische Programmiereinrichtung, welche mittels zumindest einiger ihrer Kontakte (a, b) Verbindungszustände eines Motors (M) der Maschine mit einer Netzspannung (VR) und Trennungszuständen des Motors (M) von der Netzspannung (VR) bestimmt, sowie ein elektronisches Digitalsteuerungsmodul (DIG), das bei der Steuerung der Drehzahl des Motors (M) der Waschmaschine mitwirkt, wobei das elektronische Digitalsteuermodul (DIG) mit einem Mikrokontroller (MP) und einem elektronischen monolithischen Schalter (9) zum Drosseln des dem Motor (M) zugeführten elektrischen Stroms versehen ist,
**dadurch gekennzeichnet, dass** das elektronische Digitalsteuermodul (DIG) Mittel (MP, R, C; MP, RR, RC) zum Messen einer Impedanz (Z) an Anschlüssen des Moduls, insbesondere an den Anschlüssen (P2, 10) des elektronischen Schalters (9) aufweist, um den Verbindungszustand des Motors (M) zu identifizieren, wobei die Messung der Impedanz (Z) durch den Mikrokontroller (MP) zum Steuern des Betriebs des elektronischen Schalters (9) verwendet wird, wodurch vorbestimmte Betriebs- und Außerbetriebsperioden erzeugt werden, die mit der Erfassung des Trennungszustandes oder Verbindungszustandes synchronisiert sind.

2. Waschmaschine, insbesondere Wäschewaschmaschine, nach Anspruch 1,
**dadurch gekennzeichnet, dass** die Mittel (MP, R, C; MP, RR, RC) zum Messen der Impedanz (Z) durch eine RC-Schaltung (R, C) ausgeführt sind, die zwischen einem Port (S1) des Mikrokontrollers (MP) und einem Anschluss des elektronischen Schalters (9) geschaltet ist, wobei der Port (S1) alternativ als ein Eingang und ein Ausgang konfiguriert ist.

3. Waschmaschine, insbesondere Wäschewaschmaschine, nach Anspruch 1,
**dadurch gekennzeichnet, dass** die Mittel (MP, R, C; MP, RR, RC) zum Messen der Impedanz (Z) durch eine Widerstandsschaltung (RR), die zwischen einem Anschluss (P2) des elektronischen Schalters (9) und einem ersten Port (S1) des Mikrokontrollers (MP) geschaltet ist, der als ein Ausgang konfiguriert ist, und durch einen Tiefpassfilter (RC) ausgeführt sind, der zwischen der Widerstandsschaltung (RR) und einem zweiten Port (S1') des Mikrokontrollers (MP) vorgesehen ist, welcher als ein Eingang konfiguriert ist.

4. Waschmaschine, insbesondere Wäschewaschmaschine, nach Anspruch 3,
**dadurch gekennzeichnet, dass** der erste Port (S1) eine Pulsfolge (TI) erzeugt, welcher eine vorbestimmte Frequenz (F) aufweist, wogegen der zweite Port (S1') das Vorhandensein eines Signals erkennt, welches aus der Pulsfolge (TI) erhalten wird.

5. Waschmaschine, insbesondere Wäschewaschmaschine, die enthält:
eine elektromechanische Programmiereinrichtung, welche mittels zumindest einiger ihrer Kontakte (a, b) den Verbindungszustand eines Motors (M) der Maschine mit einer Netzspannung (VR) sowie den Trennungszustand des Motors (M) von der Netzspannung (VR) bestimmt, und ein elektronisches Digitalsteuermodul (DIG), welches bei der Regelung der Drehzahl des Motors (M) mitwirkt, wobei das elektronische Digitalsteuermodul (DIG) mit einem Mikrokontroller (MP) und einem elektronischen monolithischen Schalter (9) zum Drosseln des dem Motor (M) zugeführten elektrischen Stroms versehen ist,
**dadurch gekennzeichnet, dass** das elektronische Digitalsteuermodul (DIG) Zeitmittel (R, C; RR, RC) aufweist, welche periodisch mit einer Zeitkonstanten, die eine Funktion des Verbindungs- und Trennungszustands des Motors (M) ist, aufgeladen und entladen werden, und dass Mittel (MP) vorgesehen sind, welche durch Messung des Ladewertes der Zeitmittel (R, C; RR, RC) in der Lage sind, den Verbindungs- oder Trennungszustand des Motors (M) zu kennzeichnen.

6. Verfahren zum Steuern der Rotation eines Motors einer Waschmaschine, insbesondere einer Wäschewaschmaschine, welche eine elektromechanische Programmiereinrichtung, die mittels zumindest einiger ihrer Kontakte (a, b) den Verbindungszustand eines Motors (M) der Maschine mit einer Netzspannung (VR) und den Trennungszustand des Motors (M) von der Netzspannung (VR) bestimmt, sowie ein elektronisches Digitalsteuermodul (DIG) verwendet, welches bei der Regelung der Drehzahl des Motors (M) mitwirkt, wobei das elektronische Digitalsteuermodul (DIG) mit einem Mikrokontroller (MP) und einem elektronischen monolithischen Schalter (9) zum Drosseln des den Motor (M) zugeführten elektrischen Stroms versehen ist,
**dadurch gekennzeichnet, dass** die folgenden Schritte vorgesehen sind:
a) Messen der Impedanz (Z), welche an den Anschlüssen des Moduls, insbesondere an den Anschlüssen P2, 10 des elektronischen monolithischen Schalters (9) anliegt,
b) Verknüpfen des Wertes der Messung der Impedanz (Z) mit dem Verbindungs- und dem Trennungszustand der Kontakte (a, b),
c) Sperren des Betriebs des elektronischen monolithischen Schalters (9) durch den Mikrokontroller (MP) im Falle eines Trennungszustands der Kontakte (a, b) oder Ermöglichen des Betriebes des elektronischen monolithischen Schalters (9) durch den Mikrokontroller (MP) im Falle des Verbindungszustands der Kontakte (a, b).

7. Verfahren zum Steuern der Rotation eines Motors einer Waschmaschine, insbesondere einer Wäschewaschmaschine, nach Anspruch 6,
**dadurch gekennzeichnet, dass** das Messen der Impedanz (Z) gemäß folgender Schritte ausgeführt wird:
i) Konfigurieren eines Ports (S1) des Mikrokontrollers (MP) als einen Ausgang während eines negativen Halbzyklus der Netzspannung (VR) und Anlegen einer positiven Spannung (VL) an ein kapazitives Element (C), welches zu einer RC-Schaltung (R, C) gehört, die zwischen dem Port (S1) und einem Anschluss (P2) des elektronischen Schalters (9) geschaltet ist,
ii) Konfigurieren des Ports (S1) des Mikrokontrollers (MP) als einen logischen Eingang in einem bestimmten Augenblick (TD) des nachfolgenden negativen Halbzyklus der Netzspannung (VR),
iii) Erfassen des logischen Wertes, welcher an dem Port (S1) vorhanden ist, durch die RC-Schaltung (R, C) nach einer vorgegebenen Zeit (TP),
iv) zyklische Wiederholung der Schritte i), ii) und iii).

8. Verfahren zum Steuern der Rotation eines Motors einer Waschmaschine, insbesondere einer Wäschewaschmaschine, nach Anspruch 6,
**dadurch gekennzeichnet, dass** das Messen der Impedanz (Z) gemäß der folgenden Schritte ausgeführt wird:
a) Konfigurieren eines ersten Ports (S1) des Mikrokontrollers (MP) als einen Ausgang für eine Pulsfolge (TI), die eine vorbestimmte Amplitude (A) und eine vorbestimmte Frequenz (F) aufweist,
b) Konfigurieren eines zweiten Ports (S1') des Mikrokontrollers (MP) als einen Eingang für das Erfassen der Pulsfolge (TI), die den zweiten Port (S1') über einen Tiefpassfilter (RC) erreicht, der über eine Widerstandsschaltung (RR) mit einem Anschluss (P2) des elektronischen Schalters (9) verbunden ist,
c) Messen für eine vorgegebene Zeit (TA) die Frequenz an dem zweiten Port (S1') des Mikrokontrollers (MP), wobei:
c') wenn die vorbestimmte Frequenz (F) der Pulsfolge (TI) erfasst wird, der Mikrokontroller (MP) den Trennungszustand der Kontakte (a, b) identifiziert,
c") wenn die vorbestimmte Frequenz (F) der Pulsfolge (TI) nicht erfasst wird, der Mikrokontroller (MP) den Verbindungszustand der Kontakte (a, b) kennzeichnet,
d) zyklische Wiederholung des Schrittes c).

9. Elektronisches Digitalsteuermodul zum Steuern der Drehung eines Motors (M) einer Waschmaschine, insbesondere einer Wäschewaschmaschine, welches einen Mikrokontroller (MP) enthält, der die Merkmale eines oder mehrerer der vorstehenden Ansprüche verwendet.

## Revendications

1. Machine à laver, en particulier un lave-linge, du type comprenant un programmateur électromécanique qui, au moyen d'au moins certains de ses contacts (a, b) détermine les états de connexion et de déconnexion d'un moteur (M) de la machine à partir d'une tension du secteur (VR), et un module de commande numérique électronique (DIG), qui concourent à la commande de la vitesse du moteur (M) de la machine à laver, le module de commande numérique électronique (DIG) étant muni d'un microcontrôleur (MP) et d'un commutateur électronique à semiconducteur (9) en vue d'arrêter le courant électrique fourni au moteur (M), **caractérisée en ce que** le module de commande numérique électronique (DIG) comprend des moyens (MP, R, C ; MP, RR, RC) destinés à mesurer une impédance (Z) au niveau des bornes dudit module, en particulier au niveau des bornes (P2, 10) du commutateur électronique (9), de manière à identifier l'état de connexion du moteur (M), la mesure de ladite impédance (Z) étant utilisée par ledit microcontrôleur (MP) en vue de commander le fonctionnement dudit commutateur électronique (9), en générant des périodes prédéterminées d'arrêt et de fonctionnement, qui sont synchronisées avec la détection de l'état de déconnexion et de connexion.

2. Machine à laver, en particulier un lave-linge, selon la revendication 1,
**caractérisée en ce que** les moyens (MP, R, C ; MP, RR, RC) destinés à mesurer l'impédance (Z) sont réalisés par un circuit RC (R, C) relié entre un point d'accès (S1) du microcontrôleur (MP) et une borne du commutateur électronique (9), le point d'accès (S1) étant configuré en variante en tant qu'entrée et sortie.

3. Machine à laver, en particulier un lave-linge, selon la revendication 1.
**caractérisée en ce que** les moyens (MP. R, C ; MP, RR, RC) destinés à mesurer l'impédance (Z) sont réalisés par un circuit résistif (RR) entre une borne (P2) du commutateur électronique (9) et un premier point d'accès (S1) du microcontrôleur (MP), configuré en tant que sortie, et par un filtre passe-bas (RC) constitué entre ledit circuit résistif (RR) et un second point d'accès (S1') du microcontrôleur (MP), configuré en tant qu'entrée.

4. Machine à laver, en particulier un lave-linge, selon la revendication 3;
**caractérisée en ce que** le premier point d'accès (S1) génère un train d'impulsions (TI) présentant une fréquence déterminée (F), tandis que le second point d'accès (S1') reconnaît la présence d'un signal obtenu à partir dudit train d'impulsions (TI).

5. Machine à laver, en particulier un lave-ligne, du type comprenant un programmateur électromécanique qui, au moyen d'au moins certains de ses contacts (a, b) détermine les états de connexion et de déconnexion d'un moteur (M) de la machine à partir d'une tension du secteur (VR), et un module de commande numérique électronique (DIG), qui concourent à la régulation de la vitesse du moteur (M), le module de commande numérique électronique (DIG) étant muni d'un microcontrôleur (MP) et d'un commutateur électronique à semiconducteur (9) destiné à arrêter le courant électrique fourni au moteur (M),
**caractérisée en ce que** le module de commande numérique électronique (DIG) comprend des moyens de temporisation (R, C ; RR, RC) qui sont chargés et déchargés périodiquement avec une constante de temps qui est fonction de l'état de connexion et de déconnexion du moteur (M) et ces moyens (MP) sont prévus, lesquels, en mesurant la valeur de charge desdits moyens de temporisation (R, C ; RR, RC) peuvent identifier l'état de connexion ou de déconnexion du moteur (M).

6. Procédé destiné à gérer la rotation d'un moteur d'une machine à laver, en particulier d'un lave-linge, du type utilisant un programmateur électromécanique, qui au moyen d'au moins certains de ses contacts (a, b) détermine les états de connexion et de déconnexion d'un moteur (M) de la machine à partir d'une tension du secteur (VR), et un module de commande numérique électronique (DIG), qui concourent à la régulation de la vitesse du moteur (M), le module de commande numérique électronique (DIG) étant muni d'un microcontrôleur (MP) et d'un commutateur électronique à semiconducteur (9) en vue d'arrêter le courant électrique fourni au moteur (M), **caractérisé en ce que** les étapes suivantes sont prévues :
a) la mesure de l'impédance (Z) qui est présente au niveau des bornes dudit module, en particulier au niveau des bornes (P2, 10) du commutateur électronique à semiconducteur (9),
b) l'association de la valeur de la mesure de ladite impédance (Z) à l'état de connexion ou de déconnexion des contacts (a, b),
d) l'inhibition du fonctionnement du commutateur électronique à semiconducteur (9) au moyen du microcontrôleur (MP) dans le cas de l'état de déconnexion des contacts (a, b), ou l'autorisation du fonctionnement du commutateur électronique à semiconducteur (9) par le microcontrôleur (MP) dans le cas de l'état de connexion des contacts (a, b).

7. Procédé de gestion de la rotation d'un moteur d'une machine à laver, en particulier d'un lave-linge, selon la revendication 6, **caractérisé en ce que** la mesure de l'impédance (Z) est réalisée conformément aux étapes suivantes :
i) la configuration d'un point d'accès (S1) du microcontrôleur (MP) en tant que sortie durant une alternance négative de la tension du secteur (VR), et l'application d'une tension positive (VL) à un élément capacitif (C) appartenant à un circuit RC (R, C) relié entre ledit point d'accès (S1) et une borne (P2) du commutateur électronique (9),
ii) la configuration du point d'accès (S1) du microcontrôleur (MP) en tant qu'entrée logique à un instant déterminé (TD) de l'alternance négative suivante de la tension du secteur (VR),
iii) la détection, après un temps prédéterminé (TP), de la valeur logique qui est présente au niveau du point d'accès (S1) par le circuit RC (R, C),
vi) la répétition cyclique des étapes i), ii) et iii).

8. Procédé de gestion de la rotation d'un moteur d'une machine à laver, en particulier d'un lave-linge, selon la revendication 6, **caractérisé en ce que** la mesure de l'impédance (Z) est réalisée conformément aux étapes suivantes :
a) la configuration d'un premier point d'accès (S1) du microcontrôleur (MP) en tant que sortie pour un train d'impulsions (TI) présentant une amplitude (A) et une fréquence (F) déterminées,
b) la configuration d'un second point d'accès (S1') du microcontrôleur (MP) en tant qu'entrée en vue de détecter ledit train d'impulsions (TI), lequel atteint le second point d'accès (S1') par l'intermédiaire d'un filtre passe-bas (RC) qui est relié à travers un circuit résistif (RR) vers une borne (P2) du commutateur électronique (9),
c) la mesure pendant un temps prédéterminé (TA) de la fréquence au niveau du second point d'accès (S1') du microcontrôleur (MP), où :
c') si la fréquence déterminée (F) du train d'impulsions (TI) est détectée, le microcontrôleur (MP) identifie l'état de déconnexion des contacts (a, b)
c") si la fréquence déterminée (F) du train d'impulsions (TI) n'est pas détectée, le microcontrôleur (MP) identifie l'état de connexion des contacts (a, b),
d) la répétition cyclique de l'étape c).

9. Module de commande numérique électronique, destiné à commander la rotation d'un moteur (M) d'une machine à laver, en particulier d'un lave-linge, comprenant un microcontrôleur (MP), qui utilise les caractéristiques d'une ou plusieurs des revendications précédentes.
